Europäisches Patentamt

European Patent Office

Office européen des brevets

(11) Publication number: **0 047 051**

**A1**

## (12) EUROPEAN PATENT APPLICATION

(21) Application number: **81302788.5**

(22) Date of filing: **22.06.81**

(51) Int. Cl.³: **F 16 D 3/22**

(30) Priority: **02.09.80 US 182865**

(43) Date of publication of application:
**10.03.82 Bulletin 82/10**

(84) Designated Contracting States:
**DE FR GB IT**

(71) Applicant: GENERAL MOTORS CORPORATION
General Motors Building 3044 West Grand Boulevard
Detroit Michigan 48202(US)

(72) Inventor: Franklin, Leonard Nicholas, Jr.
2177 South VanBuren
Reese Michigan 48757(US)

(74) Representative: Breakwell, John Neil Bower et al,
Patent Section General Motors Limited P.O. Box 242
Delaware Drive
Milton Keynes MK15 8HA(GB)

(54) Universal joints.

(57) A universal joint comprises inner and outer drive members 12 and 14 with longitudinal drive grooves 24 and 28 which receive drive balls 16 for transferring torque between the members. The balls are positioned by a cage 18 which is pivoted on the inner and outer drive members about two respective centers C and D which are on opposite sides of and spaced from the cage center. The cage has a cylindrical surface 40 and two stop surfaces 38 and 42 inside the cage, permitting the inner drive member 12 to slide and pivot with respect to the cage for a limited distance, so providing either a limited plunge or a limited plunge of reduced resistance.

Fig. 1

Fig. 4

EP 0 047 051 A1

# UNIVERSAL JOINTS

This invention relates to universal joints.

More particularly, the invention is concerned with universal joints of the general type having inner and outer drive members with longitudinal drive grooves, drive balls in the drive grooves for tranferring torque between the drive members, and a cage for positioning the drive balls which is pivoted on the inner and outer members about respective centers which are spaced on opposite sides of the cage center.

Particular kinds of universal joints of this general type are dsiclosed in U.S. Patent 2,046,584 (Rzeppa) - Figure 4, in U.S. Patent 3,442,095 (Devos), and in U.S. Patent 3,464,232 (Hutchinson). The universal joints disclosed in these prior patents operate on the double offset principle: that is, the cage is pivotable by reason of inner and outer part-spherical surfaces of the cage whose respective centers lie on the longitudinal axis of the cage on opposite sides of and spaced equal distances from the cage center so that the cage positions the drive balls in the homokinetic plane for constant-velocity operation at all joint angles.

In the universal joint according to the Figure 4 of U.S. Patent 2,046,584 (Rzeppa), the inner drive member is fixed axially in the cage, which in turn is fixed axially in the outer drive member. Consequently the cage prevents axial movement between the inner and outer drive members, and this universal joint is known as a fixed-center double offset joint.

The universal joints according to the U.S. Patent 3,442,095 (Devos) and U.S. Patent 3,464,232 (Hutchinson) also have inner drive members which are fixed axially in the cage. The cage, however, slides and pivots in a cylindrical surface of the outer drive member to permit axial movement between the drive members. These universal joints, which are known as plunging

-2-

double offset joints, have a high resistance to plunging movement because the inner drive member is fixed axially in the cage and the drive balls must skid when the cage slides in the outer drive member.

This high resistance to plunging movement has been recognized in U.S. Patent 3,452,558 (Cull et al) and in U.S. Patent 4,027,927 (Turner), and in these patents it is proposed to eliminate ball skidding over at least a portion of the plunging movement by the use of a separate guide ring which is fixed axially in the cage and slidably mounted on the inner drive member. The universal joints disclosed in these patents also operate on the double offset principle.

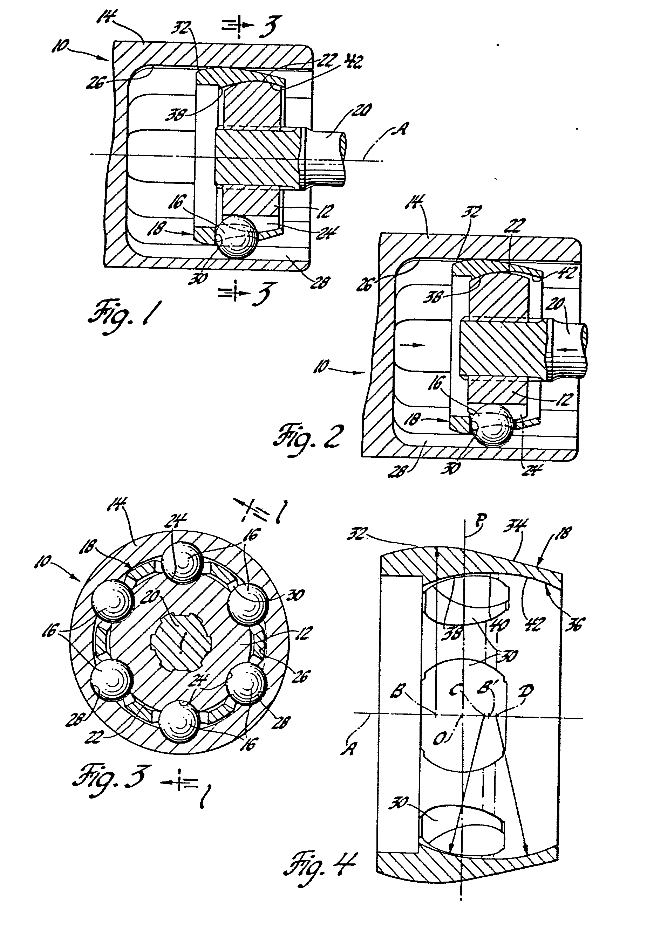

A proposal is made in U.S. Patent 3,218,827 (Aucktor) - Figure 1 - for a universal joint to have a spacing 13 between an outer part-spherical surface 12 of an inner joint member 1 and an inner part-spherical surface 14 of a cage 10 of the joint. According to the Aucktor patent disclosure, the spacing 13 facilitates the start of gliding displacement between the inner and outer drive members 1 and 5. Such a spacing principle is also reported as having been applied to the plunging double offset joint disclosed in the aforementioned Devos and Hutchinson patents, to provide a limited rolling plunge.

Consequently, to date all known proposals for reducing ball skidding in a plunging joint of the general type under consideration have adhered strictly to the principle of the inner and outer part-spherical surfaces of the cage being maintained on centers which lie on the longitudinal axis of the cage on opposite sides of and spaced equal distances from the cage center.

By the present invention there is provided a universal joint having inner and outer drive members with longitudinal drive grooves, drive balls in the drive grooves for transferring torque between the drive members, and a cage for positioning the drive balls which is pivoted on the inner and outer drive members about respective centers which are spaced on opposite sides of the cage center, characterised in that the cage has a cylindrical surface and two axially spaced stop surfaces inside the cage, and the inner member slidably engages the cylindrical surface and is movable axially and pivotally with respect to the cage between two pivot centers established by the inner member engaging the respective stop surfaces.

This configuration utilizing a cylindrical surface and two stop surfaces inside the cage allows the inner drive member to slide for a limited distance as well as pivot in the cage, and as a result the universal joint has the potential toprovide limited plunge if the cage is fixed axially in the outer drive member, or a limited plunge of reduced resistance if the cage is slidable in the outer drive member.

Such a universal joint does not require separate guide rings for the cage, in contrast to the universal joints proposed in the aforementioned Cull et al and Turner patents.

In a universal joint in accordance with the present invention, the inner drive member preferably engages the inside of the cage at all times, to allow the cage to center, or at least assist in centering, the inner drive member in the outer drive member.

Preferably the stop surfaces inside the cage are configured to a high conformity to the inner drive member, for reducing stress and wear on these components, particularly on operation of the inner drive member at either end of its stroke in the cage.

A universal joint in accordance with the present invention has the potential  to provide, for the same

-4-

cage thickness and thus cage strength, a greater amount of stroke than the spacing proposed in the aforementioned Aucktor patent. Also, radial control of the inner drive member is not sacrificed.

In the drawing:-

Figure 1 is a fragmentary longitudinal section, with parts in elevation, of one embodiment of a universal joint in accordance with the present invention, substantially along the line 1-1 of Figure 3, in the direction of the arrows, with an inner drive member of the joint shown at one end of its stroke in a cage;

Figure 2 is a fragmentary longitudinal section generally similar to Figure 1, but showing the inner drive member of the joint at the other end of its stroke;

Figure 3 is a cross-section substantially along the line 3-3 of Figure 1, in the direction of the arrows; and

Figure 4 is an enlarged longitudinal section of the cage shown in Figures 1, 2 and 3.

As is shown in the drawing, a universal joint 10 comprises an inner drive member 12, an outer drive member 14, six circumferentially spaced drive balls 16 and a cage 18.

The inner drive member 12 is splined to a shaft 20 which can be either an input shaft or an output shaft. The inner drive member 12 has an outer part-spherical surface 22 and six equally circumferentially spaced drive grooves 24 which are parallel to the longitudinal axis of the inner drive member 12.

The outer drive member 14 has an inner cylindrical surface 26 and six equally circumferentially spaced drive grooves 28 which are parallel to the longitudinal axis of the outer drive member 14.

Each of the six drive balls 16 is disposed in a respective one of the drive grooves 24 and also in a respective one of the drive grooves 28, for transfer of torque between the drive members 12 and 14. Six drive balls 16, drive grooves 24 and drive grooves 28 have been illustrated because this is the usual number. However, a greater or lesser number of drive balls and corresponding pairs of drive grooves may be used.

The cage 18 is located between the drive members 12 and 14, and it has a plurality of circumferentially spaced pockets 30 which receive the drive balls 16.

The ball pockets 30 are shaped so that the drive balls 16 have a running clearance in the axial direction, and have their centers maintained in a common plane P which intersects the longitudinal axis A of the cage 14 to define the cage center O. The ball pockets 30 are elongated in the circumferential direction so that the drive balls 16 can move circumferentially with respect to the cage 18 when the universal joint is bent at an angle.

The cage 18 has an outer part-spherical surface 32 which has center B which lies on the cage axis A to one side of and spaced a distance from the cage center O. The part-spherical surface 32 engages the cylindrical surface 26 of the outer drive member 14 so that the cage 14 slides as well as pivots in the outer drive member, as in the universal joints described in the aforementioned Devos and Hutchinson patents. The cage 18 also has a frusto-conical surface 34 at the smaller end: this is an optional feature which is disclosed in the Hutchinson patent for increasing cage thckness at the smaller end and limiting joint angle.

The cage 18 has an inner surface 36 which engages the outer part-spherical surface 22 of the inner drive member 12. This surface 36 comprises a part-spherical surface 38 which merges into an intermediate cylindrical surface 40 which in turn merges into another part-spherical surface 42 at the other end. The cylindrical surface 40 is concentric with the cage axis A, and engages the outer part-spherical surface 22 of the inner drive member 12 with a sliding fit so that the inner drive member 14 slides as well as pivots in the cage 18 between the end positions shown in Figures 1 and 2, in which the inner drive member engages the part-spherical surfaces 42 and 38 respectively of the cage 18. The part-spherical surfaces 38 and 42 have spaced centers C and D which lie on the cage axis A spaced from the cage center O on the side opposite that of center B for the outer part-spherical surface 32. The center C lies nearer to the cage center O than the center B, and the center D lies farther away

It is possible to have other shapes for the part-spherical surfaces 38 and 42 as long as these surfaces permit the inner drive member 12 to slide between the centers C and D and establish the end pivot centers C and D.

However, it is preferable to use part-spherical surfaces, specifically part-spherical surfaces which have the same diameter as the cylindrical surface 40 so that there is a high degree of conformity between the part-spherical surfaces 38 and 42 and the outer part-spherical surface 22 of the inner drive member. This reduces the stress and wear on the cage 18 and inner drive member 12 when they engage at the end positions shown in Figures 1 and 2.

A universal joint in accordance with this invention does not conform to the double offset principle because the cage 18 does not establish two equally offset pivot centers for the cage. More particularly, the cage 18 does not establish the pivot center shown at B' in Figure 4; rather, B' is an imaginary center, located on the longitudinal axis A at the same distance from the cage center O as the pivot center B located on the opposite side of the cage center O. Consequently, velocity variations are introduced when the joint is bent at an angle and rotated. At first it might seem preferable to space the centers C and D equidistant from the center B', but in practice it is preferable to bias the centers C and D away from the cage center O to increase the funnel angle, preferably with the center C located closer to the center B' than the center D is. For instance, in an actual sample of the universal joint shown in the drawing which has been built and successfully tested, the centers C and D were placed about 3.0 mm apart with the center C about 1 mm from the center B' and the center D about 2 mm, and thus twice as far, therefrom.

In operation, the universal joint 10 shown in the drawing has a limited reduced-resistance plunge which is made possible by the inner drive member 12 sliding in the cage 18 as the cage 18 slides in the outer drive member 14. This axial sliding freedom of the cage 18 with respect to both of the drive members 12 and 14 permits the drive balls 16 to roll rather than skid in the drive grooves 24 and 28. The limits of the reduced-resistance plunge are shown by Figures 1 and 2 respectively, inasmuch as in Figure 1 the inner drive member 12 is against the surface 42 of the cage 18, and from this position the inner drive member 12 is free to slide to the left to the position shown in Figure 2, where the inner drive member is against the surface 38. During this movement the cage 18 is also free to slide in the outer drive member 14, and consequently the drive balls 16 roll in the drive grooves 24 and 28. Further plunge is accommodated in conventional manner by the cage 18 sliding in the outer drive members 14 and the drive balls skidding in the drive grooves 24 and 28. When the plunge is reversed, and thus with a plunge towards the right, the universal joint again has a reduced-resistance plunge until the inner drive member 12 engages the surface 42.

During the reduced-resistance plunge, the inner drive member 12 is radially located in the cage 18, which in turn is radially located in the outer drive member 14. Consequently the cage 18 centers, or at least assists the drive balls 16 in centering, the inner drive member 12 in the outer drive member 14 at all times.

At the reduced-resistance plunge limits, the inner drive member 12 engages one of the part-spherical surfaces 38 or 42, which surfaces have a high degree of conformity to the inner drive member 12. Thus the high thrust forces associated with a further sliding plunge do not produce high stresses in the inner drive member 12 and the cage 18 or cause excessive wear.

Even though universal joints in accordance with this invention depart from the double offset principle, the introduction of velocity variations is more than compensated for by the limited reduced-resistance plunge feature.

This invention has been illustrated in connection with a plunging-type universal joint because the advantages are more fully realized in such a joint. However, the invention is also applicable to a fixed-center type of joint such as is shown in Figure 4 of the said Rzeppa patent, should a limited reduced-resistance plunge be desired in such a joint. When the present invention is applied to this type of joint, the drive balls skid during plunge, since the cage is axially fixed in the outer drive member.

Claims:

1. A universal joint having inner and outer drive members (12 and 14) with longitudinal drive grooves (24 and 28), drive balls (16) in the drive grooves for transferring torque between the drive members, and a cage (18) for positioning the drive balls which is pivoted on the inner and outer drive members about respective centers which are spaced on opposite sides of the cage center, characterised in that the cage (18) has a cylindrical surface (40) and two axially spaced stop surfaces (38 and 42) inside the cage, and the inner member (12) slidably engages the cylindrical surface and is movable axially and pivotally with respect to the cage between two pivot centers (C and D) established by the inner member engaging the respective stop surfaces.

2. A universal joint according to claim 1, characterised in that the inner member (12) is movable axially and pivotally along the axis (A) of the cage (18) between the two pivot centers (C and D), and that the pivot centers lie on the axis of the cage spaced from the cage center (0) and on the opposite side of the cage from the center (B) about which the cage pivots on the outer drive members (14).

3. A universal joint according to claim 2, characterised in that one (C) of the pivot centers (C and D) lies closer to the cage center (0) than the center (B) about which the cage (18) pivots on the outer drive member (14) and the other (D) of the pivot centers lies farther away.

4. An universal joint according to claim 3, characterised in that the one pivot center (C) lies closer than does the other pivot center (D) to an imaginary center (B') located on the axis (A) of the cage (18) at the same distance from the cage center (0) as the opposite-side center (B) about which the cage pivots on the outer member (14).

5. A universal joint according to any one of claims 1 to 4, characterised in that the axially spaced stop surfaces (38 and 42) inside the cage (18) are curved surfaces which are part-spherical and have axially spaced centers (C and D) lying on the axis (A) of the cage.

6. A universal joint according to any one of claims 1 to 5, characterised in that the two axially spaced stop surfaces (38 and 42) inside the cage (18) are part-spherical surfaces which are disposed at the respective ends of the cylindrical surface (40) and each have a diameter substantially equal to the diameter of the cylindrical surface, that each of the part-spherical stop surfaces has a center (C,D) which lies on the axis (A) of the cage spaced from the cage center (O) and on the opposite side of the cage center from the center (B) about which the cage pivots on the outer member (14), and that the inner member (12) slidably engages the inside surface (36) of the cage and is movable axially and pivotally with respect to the cage between end positions in which a part-spherical outer surface (32) of the inner drive member engages one or other of the part-spherical stop surfaces.

Fig. 1

Fig. 2

Fig. 3

Fig. 4

European Patent Office

**EUROPEAN SEARCH REPORT**

| Category | DOCUMENTS CONSIDERED TO BE RELEVANT | | | CLASSIFICATION OF THE APPLICATION (Int Cl.³) |
|---|---|---|---|---|
| | Citation of document with indication, where appropriate, of relevant passages | | Relevant to claim | F 16 D 3/22 |
| | GB - A - 1 195 008 (LÖHR & BROMKAMP) | | 1,5,6 | |
| | * the whole document * | | | |
| | --- | | | |
| | GB - A - 1 343 282 (GKN TRANS- MISSIONS) | | 1,5,6 | |
| | * the whole document * | | | |
| | --- | | | |
| | GB - A - 1 501 179 (LOHR & BROM- KAMP) | | 1,5,6 | TECHNICAL FIELDS SEARCHED (Int Cl.³) |
| | * page 3, lines 55-64; figure 4 | | | F 16 D 3/00 |
| | --- | | | |
| D | US - A - 3 218 827 (AUCKTOR) | | 1,5,6 | |
| | * columns 5 and 7; figures 7 and 10 * | | | |
| | --- | | | |
| D | US - A - 3 452 558 (CULL) | | 1 | |
| | * columns 5 and 6; figures 5 and 6 * | | | |
| | --------- | | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20.11.1981 | BALDWIN |

EPO Form 1503.1  06.78